# EUROPEAN PATENT APPLICATION

(11) **EP 0 832 723 A1**
(43) Date of publication of application: **01.04.1998**
(21) Application number: 97202659.5
(22) Date of filing: 29.08.1997
(51) Int. Cl.: B25H 5/00, B62B 1/20, B25H 3/02, B25H 3/04, B25H 3/06

(54) **Container for tools supported by a vehicle**

(30) Priority: 29.08.1996 EP 96202404
(71) Applicant: Metaalwarenfabriek "Het Fort" B.V., 4004 JV Tiel (NL)
(72) Inventor: Beuzekom, Jan Leendert, 3363 CN Sliedrecht (NL)
(74) Representative: Bartelds, Erik

(57) **Abstract**

The invention relates to a holder (1), in particular for tools (12), which is provided with a body (2) open on one side which defines a receiving space for tools (12), and with means (8) connected to the body (2) for suspension thereof. These suspension means (8) can be adapted for suspending the holder (1) on a vehicle, in particular a wheelbarrow (6), and can comprise two hooks (8) arranged on either side of the holder body (2).

The invention also relates to an assembly of such a holder (1) and a wheelbarrow (6) on which it is suspended.

## Description

The invention relates to a holder, in particular for tools, comprising a body open on one side which defines a receiving space for tools. Such a holder is generally known, for instance in the form of a tool box.

Such a tool box is in practice generally stored at or in the vicinity of the workplace. This is however not always possible, particularly not when work has to be carried out at different locations. Most known tool boxes are therefore provided with a handle, so that they can be carried to the place where the tools have to be used. This therefore always requires the use of at least one hand. Situations can however also be envisaged in which workmen have no hand free to carry their tool box. In order to store tools use is generally made in such circumstances of bags or pouches carried on the body, for instance on a belt. However, as a result of their often flexible nature such bags or pouches have the drawback that tools cannot be stowed in a well-organized manner therein and are moreover often not easy to reach.

The invention therefore has for its object to provide a holder of the above described type, which can be carried easily to the workplace and in which tools are also within easy reach at the workplace. According to the invention this is achieved in such a holder by means connected to the body for suspension thereof. Unnecessary walking back and forth during work is hereby avoided.

The suspension means are preferably adapted for suspending the holder on a vehicle, in particular a wheelbarrow. The holder can thus be transported to the workplace without difficulty, wherein the holder is moreover also well supported at the workplace.

The suspension means can comprise at least one hook connected to the holder body on a standing side. For a stable suspension of the holder it is recommended that the suspension means comprise at least two hooks arranged on either side of the holder body. When the distance between the hooks then corresponds with the width of the wheelbarrow, the holder can be suspended simply between the handles of the wheelbarrow, where it is supported in stable manner and can be reached easily. In order to enable simple clamping of the holder to the vehicle, the or each hook can therein take a resiliently flexible form.

For protection of the tools arranged therein the holder can be provided with a cover which is connected to the body and closes off the receiving space. In that case the holder body and the cover preferably have co-acting closing means, for instance in the form of a snap fastening, so that the cover remains fixed with certainty to the holder in all conditions, also during manoeuvring of the wheelbarrow on which the holder is suspended.

In order to increase the flexibility of the holder and also make it suitable for carrying tools which do not fit into the receiving space, it preferably has means for suspending loose objects, particularly tools, therefrom.

The invention also relates to an assembly of a holder as described above and a wheelbarrow.

The invention is now elucidated on the basis of an embodiment, wherein reference is made to the annexed drawing, in which:
fig. 1 shows a perspective view of the holder according to the invention in its opened situation, and
fig. 2 shows the holder depicted in fig. 1 when it is suspended on a wheelbarrow.

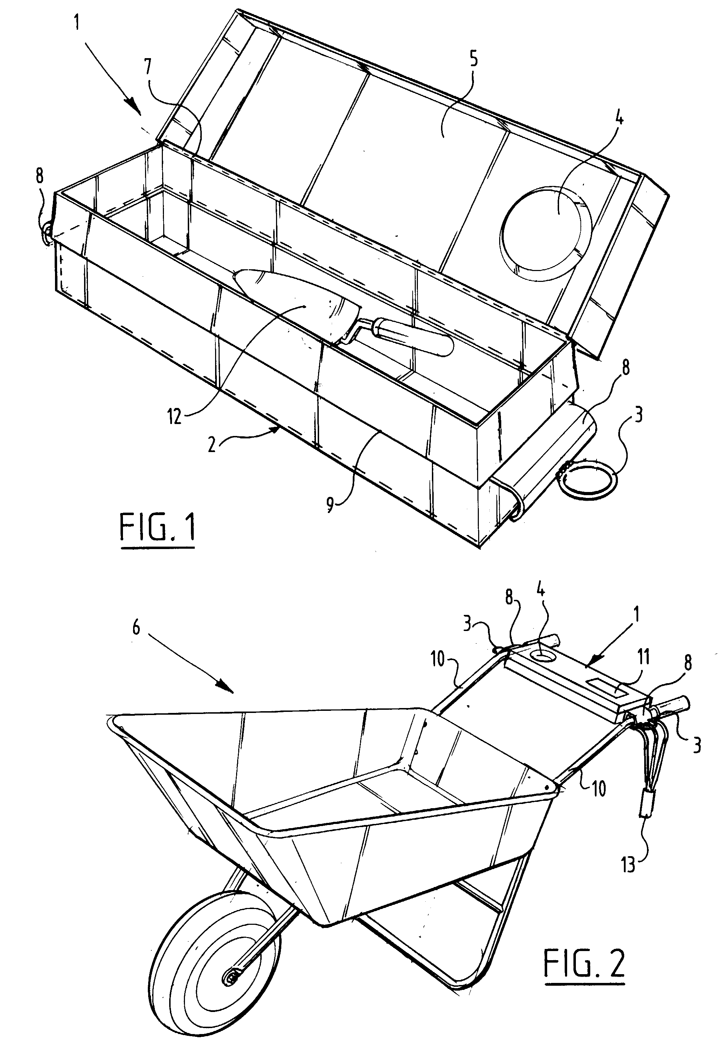

A holder 1 (fig. 1) comprises a body 2 open at the top, whereby a receiving space is defined for a particular quantity of tools 12. Holder 1 is provided on either side with hooks 8 which are fixed to the side walls thereof and which can be clamped over the handles 10 of a wheelbarrow 6. For this purpose these hooks 8 take a resiliently flexible form, for instance in that they are manufactured, just as the rest of holder 1, from a somewhat flexible plastic material such as polypropylene. Hooks 8 can then be manufactured integrally with the body 2 of holder 1. The mutual distance of the hooks 8 is further chosen such that it roughly corresponds with the distance between the handles 10 of the most common type of wheelbarrow. Owing to the resiliently flexible character of the hooks 8, they can adapt herein to small differences in the width size of wheelbarrow 6.

In order to protect the tools 12 in holder 1 from weather influences, the holder 1 is provided with a cover 5 connected hingedly on a shaft 7 to holder body 2. This hinge 7 can herein be embodied as plastic film hinge, so that body 2 and cover 5 can be manufactured integrally. In order to prevent cover 5 from springing open during manoeuvring of wheelbarrow 6 and the tools 12 falling out of the holder 1, holder body 2 and cover 5 can be provided with co-acting closing means, for instance in the form of a slightly flaring clamping or snap edge 9 round the periphery of holder body 2.

For transport of tools 13 which do not fit into the receiving space in holder body 2, separate suspension means can be provided, for instance in the form of eyes 3 fixed to clamping hooks 8. Tools 13 with protruding parts, such as for instance rakes, claw hammers and the like, can be hung directly on these eyes 3, while for other tools use can optionally be made of separate loops, hooks and other auxiliary means.

In cover 5 can optionally be arranged a recess 4, in which a glass, bottle or can may be set down in stable manner, so that the danger of it falling over is minimal. Cover 5 can also be provided with an information carrier 11, for instance a label with product information, instructions for use or a trademark. The dimensions of holder 1 are chosen such that the space between the handles 10 of a wheelbarrow 6 is utilized optimally, without the wheelbarrow 6 becoming difficult to manage or too heavy due to the addition of the holder. The holder can thus have a length in the order of a few decimeters, at a width and a height which are each in the order of one or two decimeters. In the shown example the dimensions of holder 1 amount to about 60 x 13 x 10 cm.

Although the invention is described above with reference to an embodiment, it will be apparent to the skilled person that it is not limited thereto. The clamping hooks on either side of the holder could thus be replaced by one or more hooks along the long side of the holder, with which it could be suspended on the rear edge of the container of a wheelbarrow. The hooks could also be somewhat adjustable to enable use of the holder in wheelbarrows of greatly varying dimensions. In addition, plastics other than polypropylene, or even entirely different materials, such as metals, could also be used for manufacturing the holder. The holder can of course also be fixed to vehicles other than wheelbarrows and could even be suspended on stationary objects, such as for instance a work bench.

The scope of the invention is therefore determined solely by the following claims.

## Claims

1. Holder, in particular for tools, comprising a body open on one side which defines a receiving space for tools, **characterized by** means connected to the body for suspension thereof.

2. Holder as claimed in claim 1, **characterized in that** the suspension means are adapted for suspending the holder on a vehicle, in particular a wheelbarrow.

3. Holder as claimed in claim 1 or 2, **characterized in that** the suspension means comprise at least one hook connected to the holder body on a standing side.

4. Holder as claimed in claim 3, **characterized in that** the suspension means comprise at least two hooks arranged on either side of the holder body.

5. Holder as claimed in claims 2 and 4, **characterized in that** the distance between the hooks corresponds with the width of the wheelbarrow.

6. Holder as claimed in any of the claims 3-5, **characterized in that** the or each hook takes a resiliently flexible form.

7. Holder as claimed in any of the foregoing claims, **characterized by** a cover connected to the body and closing off the receiving space.

8. Holder as claimed in claim 7, **characterized in that** the holder body and the cover have co-acting closing means.

9. Holder as claimed in any of the foregoing claims, **characterized by** means for suspending loose objects, particularly tools, therefrom.

10. Assembly of a holder as claimed in any of the claims 2-9 and a wheelbarrow.
